(19) Europäisches Patentamt
European Patent Office
Office européen des brevets

(11) **EP 3 420 770 B1**

(12) **EUROPEAN PATENT SPECIFICATION**

(45) Date of publication and mention
of the grant of the patent:
**05.08.2020 Bulletin 2020/32**

(51) Int Cl.:
***H04W 72/12*** *(2009.01)*     ***H04L 5/00*** *(2006.01)*

(21) Application number: **17711258.8**

(86) International application number:
**PCT/GB2017/050466**

(22) Date of filing: **23.02.2017**

(87) International publication number:
**WO 2017/144883 (31.08.2017 Gazette 2017/35)**

(54) **PASSIVE INTERMODULATION SHAPING**

PASSIVINTERMODULATIONSFORMUNG

MISE EN FORME D'INTERMODULATION PASSIVE

(84) Designated Contracting States:
**AL AT BE BG CH CY CZ DE DK EE ES FI FR GR
HR HU IE IS IT LI LT LU LV MC MK MT NL NO PL
PT RO RS SE SI SK SM TR**

(30) Priority: **23.02.2016 GB 201603072**

(43) Date of publication of application:
**02.01.2019 Bulletin 2019/01**

(73) Proprietor: **Vodafone IP Licensing Limited
The Connection
Newbury
Berkshire RG14 2FN (GB)**

(72) Inventors:
• **TURK, John
London W2 6BY (GB)**
• **MURRAY, Eric
London W2 6BY (GB)**

(74) Representative: **Boult Wade Tennant LLP
Salisbury Square House
8 Salisbury Square
London EC4Y 8AP (GB)**

(56) References cited:
**GB-A- 2 508 383     US-A1- 2013 044 621**

**Description**

This disclosure relates to an apparatus for controlling radio resource allocation in a node of a radio access network.

**BACKGROUND**

The use of portable electronic devices for wireless data and voice communications for using a cellular telecommunications, such as one operating in accordance with the 4G Long-Term Evolution (LTE) or Long-Term Evolution Advanced (LTE-A) telecommunication standards have proliferated in recent years.

In LTE and LTE-A compliant telecommunication networks, and orthogonal frequency-division multiple access (OFDMA) scheme is used. In this scheme, the physical channels and physical signals are mapped onto the OFDMA symbols and sub-carriers. These are grouped together into frames in which data is transmitted. Each frame is further divided into a plurality of physical resource blocks (PRBs). A base station in the network, known in LTE networks as an eNodeB, or eNB, allocates PRBs to the user equipment (UE) which may be utilised when sending data to the base station.

The role of the LTE scheduler is to organise fitting data into the LTE frame. This organisation is complex, and is sensitive to factors including traffic volume, QoS requirements, and radio conditions.

The increase of telecommunication usage has resulted in the number of frequency bands and amount of spectrum used in each band increasing considerably. This proliferation of telecommunication usage has often resulted in an associated decrease in system performance. It is desirable to adapt the operation of the Radio Access Network components to improve system performance, or at least to mitigate this reduction in system performance.

It has been identified that one of the underlying factors for the decrease in performance is the result of passive intermodulation (PIM). It is in the above context in which PIM can adversely affect the performance of the network. PIM is an interference which occurs during the mixing of two or more frequencies by non-linear components when the frequencies are transmitted by the same antenna. PIM regularly occurs due to physical factors in the antenna, such as natural corrosion of the components, manufacturing defects and damage, poor connections at junctions and contaminated connections. Specifically within the LTE and LTE-A environments, multiple different frequency bands are often emitted from a single antenna, which renders it susceptible to the aforementioned physical effects.

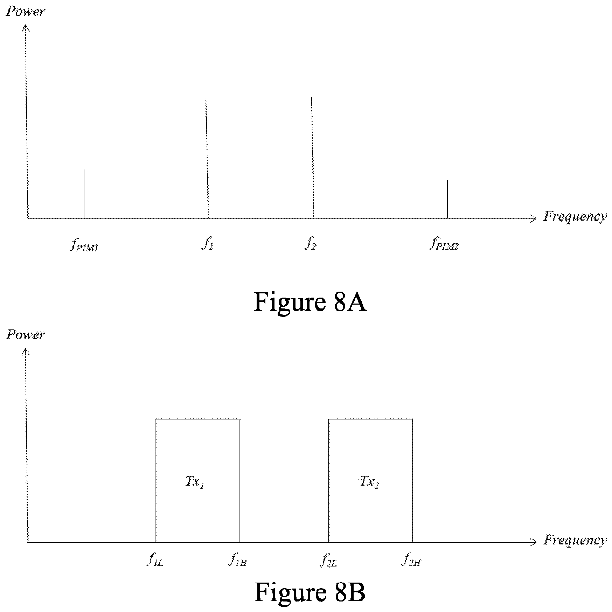

Although PIM occurs across many frequencies, interference is most severe at the third order product. For two single frequencies, $f_1$ and $f_2$, as shown in Figure 8A, PIM is calculated as:

$$f_{PIM1} = 2f_1 - f_2$$

$$f_{PIM2} = 2f_2 - f_1$$

In an environment with two transmissions, i.e., two downlink frames, in reality each of these frames will have a finite bandwidth running from a lower frequency 'L' to a higher frequency 'H', as shown in Figure 8B. Therefore the equations must be adjusted accordingly. For two frequency bands $f_{1L} \rightarrow f_{1H}$ and $f_{2L} \rightarrow f_{2H}$ it is necessary to consider the four ranges of frequencies that will be affected by PIM. These are:

$$2f_{1L} - f_{2H} \rightarrow 2f_{1L} - f_{2L}$$

$$2f_{1H} - f_{2H} \rightarrow 2f_{1H} - f_{2L}$$

$$2f_{1L} - f_{2H} \rightarrow 2f_{1H} - f_{2H}$$

$$2f_{1L} - f_{2L} \rightarrow 2f_{1H} - f_{2L}$$

Thus through overlap and substitution of these four ranges, the effective range and location of PIM occurring from two frames of the same bandwidth may be reduced to the following; which is effectively three times the bandwidth of the source.

$$2f_{1L} - f_{2H} \rightarrow 2f_{1H} - f_{2L}$$

One of the effects of the number of frequency bands and amount of frequency spectrum used in each band increasing is that the bandwidths of PIM have also increased. Within the LTE and LTE-A environment, it has been shown that the resulting PIM from two or more downlink frames has particular adverse effects on uplink frames from a UE to the eNB.

It is in this context that the present disclosure is devised.

GB 2 508 383 A discloses a method of processing interference in a data stream carrying a plurality of uplink signals received in a wireless network, where the interference comprises a non-linear product of at least one downlink signal of the wireless network.

**BRIEF SUMMARY OF THE DISCLOSURE**

The invention is defined by the independent claims. Embodiments are defined by the dependent claims.

Viewed from one aspect, the present disclosure provides an apparatus for controlling radio resource allocation in a node of a radio access network to minimize interference in a received uplink signal caused by passive intermodulation, PIM, between downlink signals for transmission by the same antenna in the same frame, comprising: a logical module configured for use in a scheduler for allocating physical resource blocks, PRBs, to plural user equipment, UE, in a frame for transmitting data to the UEs from a single antenna of the node, the logical module being configured to in use: receive channel quality indicators, CQIs, of PRB allocations for different UEs in the frame, determine suitable PRBs for each UE, based on the CQIs; and determine a PRB allocation for each UE from the suitable PRBs for each UE based on: in the time domain, minimizing the spread in time slots for each UE and in the frequency domain, maximizing the spread in frequency for each UE. The result of this is that the effect of PIM is reduced in uplink frames, therefore further resulting in less data loss and corruption and hence a more efficient telecommunications network.

Viewed from another aspect, the present disclosure provides a method for controlling radio resource allocation in a node of a radio access network to minimize interference in a received uplink signal caused by passive intermodulation, PIM, between downlink signals for transmission by the same antenna in the same frame, the method comprising the steps of: allocating physical resource blocks, PRBs, to plural user equipment, UE, in a downlink frame for transmitting data to the UEs from a single antenna of the node, receiving channel quality indicators, CQIs, of PRB allocations for different UEs in the frame, determining suitable PRBs for each UE, based on the CQIs, and determining a PRB allocation for each UE from the suitable PRBs for each UE based on: in the time domain, minimizing the spread in time slots for each UE, and in the frequency domain, maximizing the spread in frequency for each UE.

Viewed from another aspect, the present disclosure provides a computer readable medium, optionally non-transitory, storing instructions which when executed by the one or more processors of the apparatus in the first aspect of the present disclosure, instantiate and operate the logical module.

## BRIEF DESCRIPTION OF THE DRAWINGS

Embodiments of the disclosure are further described hereinafter with reference to the accompanying drawings, in which:

Figure 1 provides a schematic diagram illustrating a conventional mobile telecommunications network.

Figure 2 provides a schematic diagram illustrating a downlink frame.

Figure 3 provides a schematic diagram of a grid which illustrates the structure of a conventional downlink slot.

Figures 4A and 4B provide an example of the effects of PIM two downlink frames may have on an uplink frame, with Figure 4B being illustrative of the effect of embodiments of the present disclosure on reducing the impacts of PIM.

Figure 5 provides a schematic diagram illustrating a base station and scheduler configuration across multiple cells.

Figure 6 illustrates an embodiment of the process flow of the scheduler located in the base station configured and operating in accordance with apparatuses and methods of the present disclosure.

Figures 7A and 7B provide an example embodiment of the operation of the scheduling algorithm in accordance with apparatuses and methods of the present disclosure to reduce interference due to PIM where optimal resources for multiple UEs overlap within the frame.

Figures 8A and 8B illustrate single and finite bandwidth frequencies which can combine to produce interference through PIM.

## DETAILED DESCRIPTION

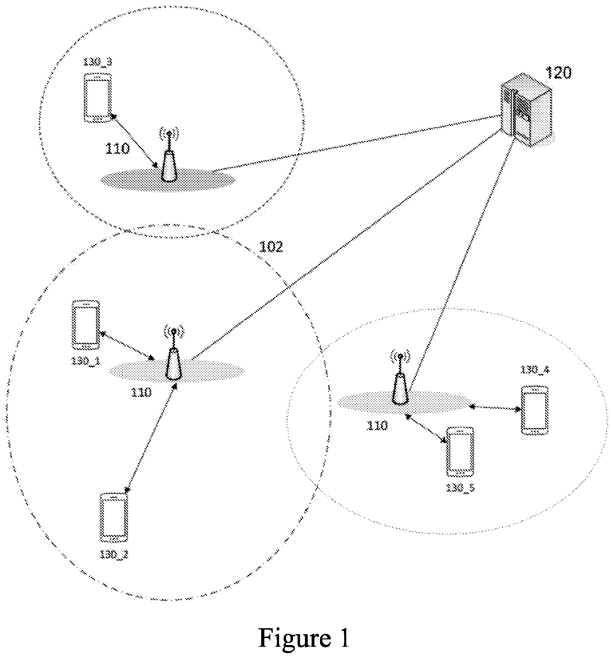

Figure 1 provides a schematic diagram illustrating some basic functionality of a conventional mobile telecommunications network.
The network includes a plurality of base stations 110 connected to a core network 120.
The base stations 110 implement the Radio Access Network, which, under LTE enables packet switched voice and data communication between User Equipment 130 and a Core Network 120. Each base station 110 provides a coverage area 102 within which data can be communicated to and from UEs 130. Data is transmitted from base stations 110 to UEs 130 within their respective coverage areas 102 via a radio downlink. Data is transmitted from UEs 130 to the base stations 110 via a radio uplink. The core network 120 routes data to and from the UEs 130 via the respective base stations 110 and provides functions such as authentication, mobility management, charging and so on.

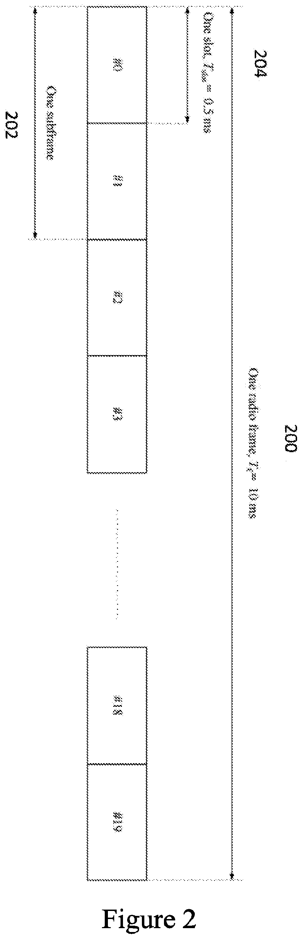

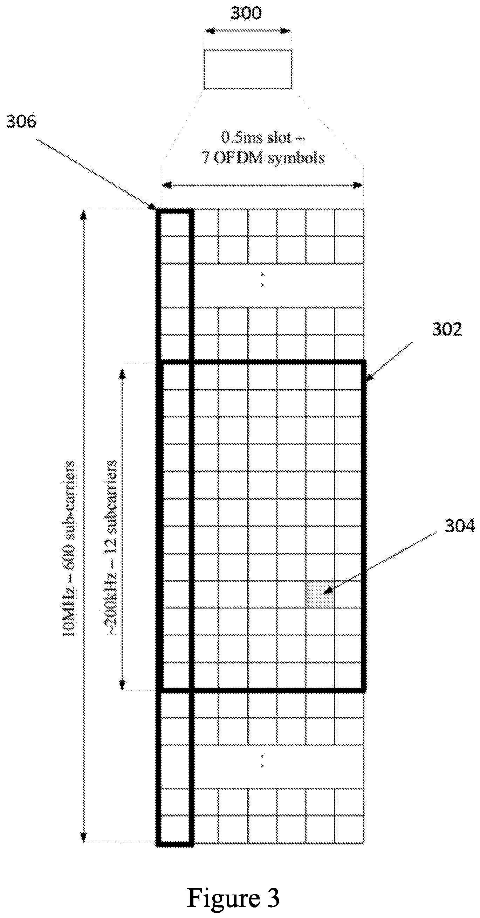

Figure 2 shows a schematic diagram illustrating an OFDM based LTE downlink radio frame 200. Here, the horizontal axis represents time while the vertical represents frequency. The LTE downlink radio frame 200 is transmitted from an LTE base station (known as an enhanced Node B, eNodeB, or eNB) and lasts 10 ms. The downlink radio frame comprises ten sub-frames 202, each sub-frame lasting 1 ms. Sub-frames 202 are themselves divided into two slots 204 (each 0.5ms). These slots are numbered to allow distinctions to be made between slots, thus Figure 3 shows slots #0, #1 ...#18, #19 in time order. Synchronisation signals are transmitted in certain sub-frames of the LTE radio frame to allow receiving UEs to maintain synchronisation with the radio transmissions of the eNB. Within an operating frequency band, an eNB may transmit different frames on different cells, each cell having the same bandwidth.

Figure 3 is a schematic diagram of a grid which illustrates the structure of an example conventional downlink LTE slot 300. As in Figure 2, the horizontal axis represents time while the vertical represents frequency. The frequency axis is divided into a predetermined number of orthogonal sub-carriers, 15kHz each, distributed across the bandwidth of the downlink radio carrier, say 10MHz. The slot 300 comprises a predetermined number of "symbols" 306, which are transmitted during the 0.5 ms interval of the slot.

The example slot 300 shown in Figure 3 comprises seven OFDM symbols 306 and six hundred sub-carriers (some of these are omitted for brevity) spread across a 10MHz bandwidth. The smallest allocation of *user* data for transmission in LTE is a "resource block" 302 comprising twelve sub-carriers transmitted over one slot. Control data may be allocated to smaller units known as resource elements, corresponding to a single sub-carrier of a given symbol - an example of a resource element is shown in Figure 3, (reference sign - 304).

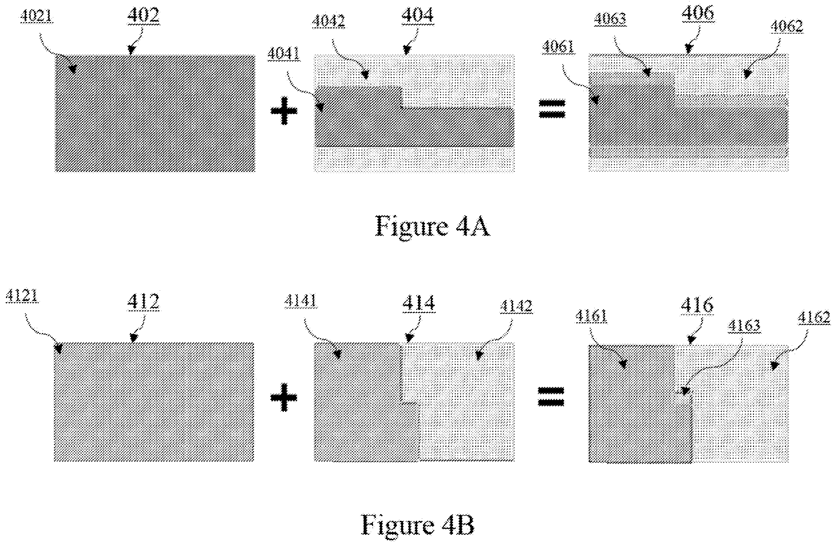

Figures 4A and 4B are a simplified example of the PIM effects which two downlink frames may have on an uplink frame, where Figure 4B illustrates how the operation of a scheduler using apparatuses and methods of the present disclosure, can reduce the effects of interference due to PIM on performance of the Radio Access Network. The horizontal axis represents time, and the vertical axis represents frequency.

In Figure 4A, in the downlink frame 402 of a first cell, every resource block 4021 within the frame has been allocated data by the scheduler. In downlink frame 404 of a second cell, only a portion 4041 of the frame has been allocated by the scheduler, wherein the remaining resource blocks 4042 do not comprise allocated resource blocks. The resource blocks allocated 4041 have been allocated so that they maximize the spread in time and minimize the spread in frequency. When the first frame 402 and second frame 404 are transmitted simultaneously from the same antenna but on different frequency bands, PIM may occur which affects the uplink frame 406 corresponding to the second cell. The resource blocks affected by PIM in the uplink frame 406 may be divided into two groups. The first group 4061 correlate to the resource blocks allocated 4041 in the downlink frame 404 relating to the second cell. The second group 4063 borders the first group 4061 in the frequency domain across the whole frame, this is because the effects of PIM are three times larger than the bandwidth of the transmission. Therefore the area not affected by PIM 4062 is reduced.

On the other hand, in Figure 4B, like in Figure 4A, in the downlink frame 412 of a first cell, every resource block 4121 within the frame has been allocated data by the scheduler. In downlink frame 414 of a second cell, only a portion 4141 of the frame has been allocated by the scheduler, wherein the remaining resource blocks 4142 do not comprise allocated resource blocks. Unlike in the Figure 4A arrangement, the resource blocks allocated 4141 have been allocated so that they minimize the spread in time and maximize the spread in frequency. When the first frame 412 and second frame 414 are transmitted simultaneously from the same antenna but on different frequency bands, PIM may occur which affects the uplink frame 416 corresponding to the second cell. The resource blocks affected by PIM in the uplink frame 416 may be divided into two groups. The first group 4161 correlate to the resource blocks allocated 4141 in the downlink frame 414 relating to the second cell. Similarly to the example in Figure 4A, because the effects of PIM are three times larger than the bandwidth of the transmission, the second group 4163 affected by PIM borders the first group 4161 in the frequency domain. However because the spread in time has been minimized, it does not span across the whole time slot. Rather, the affected area of the second group 4163 borders only the frequencies of the first group 4161, and is limited in time to only the time slots contemporaneous with the first group 4161. Therefore the area not affected by PIM 4162 is increased compared to the area 4062 in Figure 4A, and, in accordance with aspects of the present disclosure, the effects of PIM can be minimised by configuring a scheduler to allocate resource blocks accordingly.

Contrasting the effects of PIM in the uplink frame of Figures 4A and 4B, in 4A a greater number of resource blocks are effected in the uplink frame 406 as the third order effect of PIM is three times the width of the source frequency. Apparatuses and methods of the present disclosure therefore advantageously cause a scheduler to consider allocating resource blocks based on a recommended PIM-minimising resource allocation that attempts to minimize the spread in time and maximize the spread in frequency when allocating resource blocks within downlink frames.

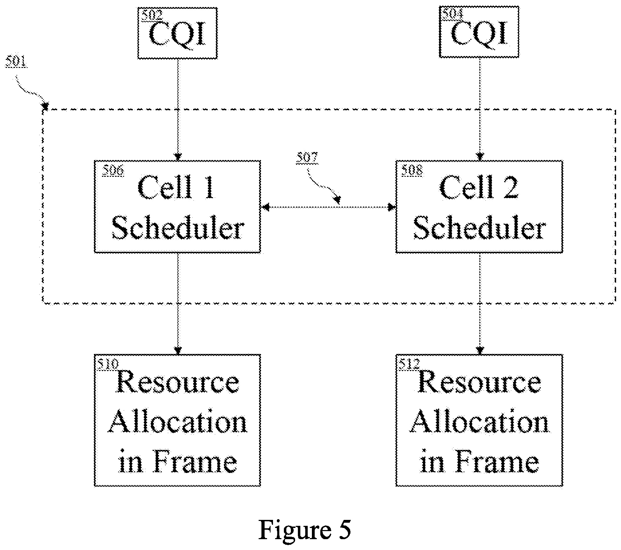

Figure 5 illustrates an eNB base station used in the LTE environment. There are two primary functions associated with the eNB. The first of which is that the eNB is responsible for the distribution of radio transmissions to all UEs on the downlink channels and receives transmissions from the UEs on the uplink channels. This is put into effect through combination of both analogue and digital signal processing functions. Next, the eNB sends signaling messages to the UEs in order to control their operation, for example in relation to allocating resource blocks to be used in uplink communication.

In this function, the eNB includes a scheduler for arranging data into resource blocks within a downlink frame. The scheduling of resource blocks may take into account various factors which many include any of: quality of service (QoS) reports, channel quality indicators (CQIs), buffer status, discontinuous reception (DRX) patterns, hybrid automatic repeat request (HARQ) acknowledgments and rank indications.

Each resource block may have an associated CQI. The CQI consists of 4-bits, these bits collectively indicate the maximum data rate that a UE is capable of managing with a resource block error ratio of 10% or less. The CQI is primarily calculated from the received signal to interference plus noise ratio (SINR). It may also depend on the configuration of the UE and its ability to process amounts of data.

PIM occurs in a base station during the simultaneous transmission of data on different radio frequencies. Specifically within the LTE environment, it occurs an eNB when during the transmission of data in two different cells of the same bandwidth and of the same LTE frequency band, but in the same frame. Figure 5 of the present disclosure illustrates the relationship between the individual schedulers for each cell. Data 602, 604 for each cell is received by their respective schedulers 606, 608. The data may comprise any of: QoS reports, CQIs, buffer status, DRX patterns, HARQ acknowledgments and rank indications.

Furthermore, the first cell scheduler 506 and the second cell scheduler 508 may share information 507 such as CQIs. For a given frame the schedulers 506, may use this information 507 to allocate resource blocks in their respective frames in order to reduce the effects of PIM. The scheduler 506, 507 may be implemented by software or hardware or a combination of the two.

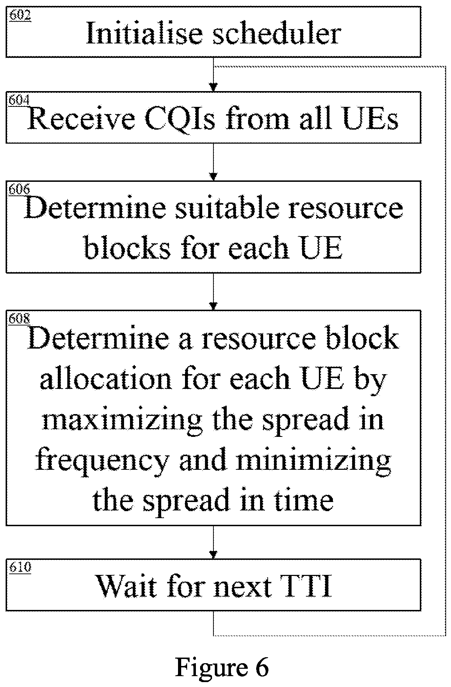

The methods and apparatuses of the present disclosure will now be described in more detail in relation to Figure 6. Figure 6 is a process flow diagram relating to the operation of the scheduler located in the eNB.

In step 602, the scheduler is initialised.

In step 604 the scheduler receives CQI reports from all the UEs which are in communication with the eNB. These CQI reports are subsequently stored, temporarily or permanently in the memory of the scheduler.

In step 606, using the data from the CQIs received from the respective UEs, the scheduler determines the resource blocks within a frame for each UE.

In step 608, the scheduler determines a resource block allocation within the frame in order to maximise the spread in frequency and minimize the spread in time. Furthermore, where optimal time and frequency resources overlap in a frame, in order to reconcile the overlap, the scheduler allocates subsets of resource blocks within the frame in order maximise the spread in frequency and minimize the spread in time.

In step 610, the scheduler repeats the aforementioned scheduling process for the next frame after the transmission time interval (TTI) of the existing frame has completed.

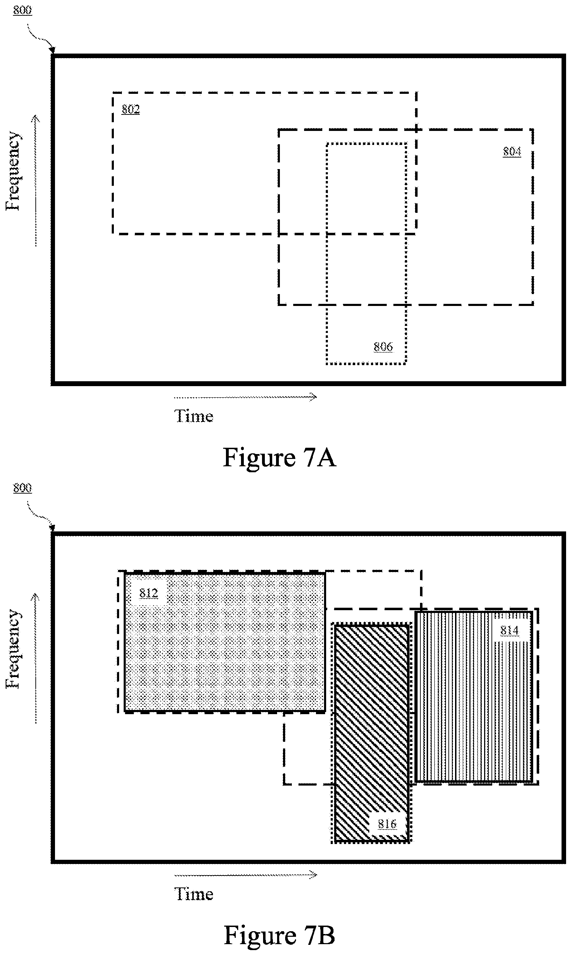

Figures 7A and 7B relate to an example where suitable radio resources (PRBs) overlap in a frame. In Figure 7A, the illustrated frame 800, comprises the suitable time and frequency resources 802, 804, 806 for three UEs as determined from the received CQIs from each of the UEs. These three suitable resource allocations 802, 804 and 806 intersect and overlap at various areas across the frame 800.

Figure 7B illustrates the application of the scheduler in accordance with the present disclosure on the frame 800 in order to reduce the effects of PIM. For each of the respective suitable resources 802, 804, 806 the resources have been allocated 812, 814, 816 within the frame, generally and also when reconciling any overlap between the suitable resources, in order to maximize the range in frequency and minimize the range in time, thus reducing the effects of PIM.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, described in conjunction with a particular aspect, embodiment or example of the methods and apparatuses of the present disclosure are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The present disclosure is not restricted to the details of any foregoing embodiments. The present disclosure extends to any novel one, or any novel combination, of the features disclosed in this specification (including any accompanying claims, abstract and drawings), or to any novel one, or any novel combination, of the steps of any method or process so disclosed.

**Claims**

1. An apparatus for controlling radio resource allocation in a node of a radio access network to minimize interference in a received uplink signal caused by passive intermodulation, PIM, between downlink signals for transmission by the same antenna in the same frame, comprising:

　　a logical module configured for use in a scheduler for allocating physical resource blocks, PRBs, to plural user equipment, UE, in a frame for transmitting data to the UEs from a single antenna of the node;

the logical module being configured to in use:

> receive (604) channel quality indicators, CQIs, of PRB allocations for different UEs in the frame;
> determine (606) suitable PRBs for each UE, based on the CQIs; and
> determine (608) a PRB allocation for each UE from the suitable PRBs for each UE based on:
>
> > in the time domain, minimizing the spread in time slots for each UE; and;
> > in the frequency domain, maximizing the spread in frequency for each UE.

2. The apparatus as claimed in claim 1, the logical module being further configured to allocate PRBs to UEs based on the PRB allocation.

3. The apparatus as claimed in claim 2, wherein the logical module is further configured to allocate PRBs to UEs based on one or more of: traffic volumes and a volume of buffered data for transmission to the UEs at the node; QoS requirements; and radio conditions.

4. The apparatus as claimed in any preceding claim, further configured to detect, or receive an indication of detected PIM interference in the antenna of the node, and adjust the determined PRB allocation for each UE to reconcile an overlap between the suitable PRBs for each UE..

5. The apparatus as claimed in any preceding claim, wherein the logical module is further configured to: in PRBs where the PRB allocations of the different UEs overlap, adjust the determined PRB allocation for each UE to reconcile any overlap between the suitable PRBs for each UE based on:

> in the time domain, minimizing the spread in time slots for each UE; and
> in the frequency domain, maximizing the spread in frequency for each UE.

6. The apparatus as claimed in any preceding claim, wherein the logical module is configured to group PRBs to give resource allocations into groupings each having continuous spans in time slots and in frequency, the groupings being adjusted to minimise PIM.

7. The apparatus as claimed in any preceding claim, configured for use as a scheduler in a Long-Term Evolution, LTE, Release 8 or later standard-compliant network.

8. The apparatus as claimed in any preceding claim, wherein the apparatus is configured as part of a scheduler and wherein the node is an Evolved Node B, eNB.

9. The apparatus as claimed in claim 7, wherein the apparatus is configured as a scheduler to cause the eNB to transmit buffered data for the UEs to the UEs in the allocated resource blocks in the frame.

10. The apparatus as claimed in any preceding claim, wherein the logical module is further configured to receive CQIs at each transmission time interval, TTI.

11. The apparatus as claimed in any preceding claim wherein the CQIs comprise part of uplink control information, UCI.

12. The apparatus as claimed in any preceding claim, wherein the logical module is configured to operate to determine PRB allocations for each UE based on the CQIs for each frame every transmission time interval, TTI.

13. The apparatus Apparatus as claimed in any preceding claim, further comprising one or more processors and computer readable media storing instructions which when executed by the one or more processors, instantiate and operate the logical module.

14. A method for controlling radio resource allocation in a node of a radio access network to minimize interference in a received uplink signal caused by passive intermodulation, PIM, between downlink signals for transmission by the same antenna in the same frame, the method comprising the steps of:

> allocating physical resource blocks, PRBs, to plural user equipment, UE, in a downlink frame for transmitting data to the UEs from a single antenna of the node;
> receiving (604) channel quality indicators, CQIs, of PRB allocations for different UEs in the frame;
> determining (606) suitable PRBs for each UE, based on the CQIs; and
> determining (608) a PRB allocation for each UE from the suitable PRBs for each UE based on:
>
> > in the time domain, minimizing the spread in time slots for each UE; and;
> > in the frequency domain, maximizing the spread in frequency for each UE.

15. Computer readable medium, storing instructions which when executed by the one or more processors of an apparatus as claimed in any of claims 1 to 13, instantiate and operate the logical module.

**Patentansprüche**

1. Eine Vorrichtung zur Steuerung der Funkressourcenzuweisung in einem Knoten eines Funkzugangsnetzes, um Störungen in einem empfangenen Aufwärtsstreckensignal zu minimieren, die durch passive Intermodulation (PIM) zwischen Abwärtsstreckensignalen zur Übertragung durch dieselbe Antenne in demselben Rahmen verursacht werden, umfassend:

    ein logisches Modul, konfiguriert zur Verwendung in einem Planer zur Zuweisung physischer Ressourcenblöcke (PRBs) an mehrere Benutzergeräte (User Equipment, UEs) in einem Rahmen, um Daten von einer einzelnen Antenne des Knotens an die UEs zu übertragen; wobei das logische Modul so konfiguriert ist, dass es unter Verwendung:

        Kanalqualitätsindikatoren (Channel Quality Indicators, CQIs) von PRB-Zuweisungen für unterschiedliche UEs in dem Rahmen empfängt (604); geeignete PRBs für jedes UE basierend auf den CQIs bestimmt (606); und eine PRB-Zuweisung für jedes UE aus den geeigneten PRBs für jedes UE bestimmt (608), basierend auf Folgendem:

            im Zeitbereich, Minimieren der Spreizung in Zeitschlitzen für jedes UE; und im Frequenzbereich, Maximieren der Spreizung in der Frequenz für jedes UE.

2. Die Vorrichtung nach Anspruch 1, wobei das logische Modul weiter so konfiguriert ist, dass PRBs basierend auf der PRB-Zuweisung an UEs zugewiesen werden.

3. Die Vorrichtung nach Anspruch 2, wobei das logische Modul weiter so konfiguriert ist, dass PRBs basierend auf einem oder mehreren der folgenden an UEs zugewiesen werden: Verkehrsvolumen und ein Volumen zwischengespeicherter Daten zur Übertragung an die UEs an dem Knoten; Dienstqualitätsanforderungen; und Funkbedingungen.

4. Die Vorrichtung nach einem vorhergehenden Anspruch, weiter so konfiguriert, dass eine PIM-Störung in der Antenne des Knotens erkannt oder ein Hinweis auf eine erkannte PIM-Störung empfangen wird und die bestimmte PRB-Zuweisung für jedes UE angepasst wird, um eine Überschneidung zwischen den geeigneten PRBs für jedes UE auszugleichen.

5. Die Vorrichtung nach einem vorhergehenden Anspruch, wobei das logische Modul weiter so konfiguriert ist, dass: bei PRBs, bei denen die PRB-Zuweisungen der unterschiedlichen UEs sich überschneiden, die bestimmte PRB-Zuweisung für jedes UE angepasst wird, um Überschneidungen zwischen geeigneten PRBs für jedes UE auszugleichen, basierend auf Folgendem:

        im Zeitbereich, Minimieren der Spreizung in Zeitschlitzen für jedes UE; und im Frequenzbereich, Maximieren der Spreizung in der Frequenz für jedes UE.

6. Die Vorrichtung nach einem vorhergehenden Anspruch, wobei das logische Modul so konfiguriert ist, dass PRBs gruppiert werden, um Ressourcenzuweisungen in Gruppen einzuordnen, wobei jede davon fortlaufende Spannen von Zeitschlitzen und Frequenzen aufweist, wobei die Gruppen zur Minimierung von PIM angepasst werden.

7. Das Verfahren nach einem vorhergehenden Anspruch, konfiguriert zur Verwendung als Planer in einem standardkonformen LTE-Netz (LTE = Long-Term Evolution, langfristige Entwicklung) der Version 8 oder höher.

8. Die Vorrichtung nach einem vorhergehenden Anspruch, wobei die Vorrichtung als Teil eines Planers konfiguriert ist und wobei es sich bei dem Knoten um einen weiterentwickelten Knoten B (Evolved Node B, eNB) handelt.

9. Die Vorrichtung nach Anspruch 7, wobei die Vorrichtung als ein Planer konfiguriert ist, um zu veranlassen, dass der eNB zwischengespeicherte Daten für die UEs an die UEs in den zugewiesenen Ressourcenblöcken in dem Rahmen überträgt.

10. Die Vorrichtung nach einem vorhergehenden Anspruch, wobei das logische Modul weiter so konfiguriert ist, dass CQIs an jedem Übertragungszeitintervall (Transmission Time Interval, TTI) empfangen werden.

11. Die Vorrichtung nach einem vorhergehenden Anspruch, wobei die CQIs einen Teil von Aufwärtsstreckensteuerungsinformationen (Uplink Control Information, UCI) umfassen.

12. Die Vorrichtung nach einem vorhergehenden Anspruch, wobei das logische Modul so konfiguriert ist, dass es betrieben wird, um PRB-Zuweisungen für jedes UE basierend auf den CQIs für jeden Rahmen zu jedem Übertragungszeitintervall (Transmission Time Interval, TTI) zu bestimmen.

**13.** Die Vorrichtung nach einem vorhergehenden Anspruch, weiter umfassend eine oder mehrere Verarbeitungseinheiten und computerlesbare Medien mit darauf gespeicherten Anweisungen, die bei Ausführung durch die eine oder die mehreren Verarbeitungseinheiten das logische Modul instanziieren und betreiben.

**14.** Ein Verfahren zur Steuerung der Funkressourcenzuweisung in einem Knoten eines Funkzugangsnetzes, um Störungen in einem empfangenen Aufwärtsstreckensignal zu minimieren, die durch passive Intermodulation (PIM) zwischen Abwärtsstreckensignalen zur Übertragung durch dieselbe Antenne in demselben Rahmen verursacht werden, wobei das Verfahren die folgenden Schritte umfasst:

Zuweisen physischer Ressourcenblöcke (PRBs) an mehrere Benutzergeräte (User Equipment, UEs) in einem Abwärtsstreckenrahmen, um Daten von einer einzelnen Antenne des Knotens an die UE zu übertragen; Empfangen (604) von Kanalqualitätsindikatoren (Channel Quality Indicators, CQIs) von PRB-Zuweisungen für unterschiedliche UEs in dem Rahmen; Bestimmen (606) geeigneter PRBs für jedes UE basierend auf den CQIs; und Bestimmen (608) einer PRB-Zuweisung für jedes UE aus den geeigneten PRBs für jedes UE, basierend auf Folgendem:

im Zeitbereich, Minimieren der Spreizung in Zeitschlitzen für jedes UE; und im Frequenzbereich, Maximieren der Spreizung in der Frequenz für jedes UE.

**15.** Computerlesbares Medium mit darauf gespeicherten Anweisungen, die bei Ausführung durch die eine oder die mehreren Verarbeitungseinheiten einer Vorrichtung nach einem der Ansprüche 1 bis 13 das logische Modul instanziieren und betreiben.

**Revendications**

**1.** Un appareil de commande d'une attribution de ressources radio dans un nœud d'un réseau d'accès radio destiné à la minimisation d'un brouillage dans un signal en liaison montante reçu provoqué par une intermodulation passive, PIM, entre des signaux en liaison descendante destinés à une transmission par la même antenne dans la même trame, comprenant :

un module logique configuré pour une utilisation dans un planificateur destiné à l'attribution de blocs de ressource physiques, PRB, à une pluralité d'équipements d'utilisateur, UE, dans une trame destinés à la transmission de données aux UE à partir d'une antenne unique du nœud, le module logique étant configuré de façon à en utilisation :

recevoir (604) des indicateurs de qualité de canal, CQI, d'attributions de PRB destinés à différents UE dans la trame, déterminer (606) des PRB appropriés pour chaque UE en fonction des CQI, et déterminer (608) une attribution de PRB pour chaque UE à partir des PRB appropriés pour chaque UE en fonction de :

dans le domaine temporel, la minimisation de l'étalement dans des intervalles temporels pour chaque UE, et dans le domaine fréquentiel, la maximisation de l'étalement en fréquence pour chaque UE.

**2.** L'appareil selon la Revendication 1, le module logique étant configuré en outre de façon à attribuer des PRB à des UE en fonction de l'attribution de PRB.

**3.** L'appareil selon la Revendication 2, où le module logique est configuré en outre de façon à attribuer des PRB à des UE en fonction d'un ou plusieurs éléments parmi : des volumes de trafic et un volume de données mises en mémoire tampon pour une transmission aux UE au niveau du nœud, des exigences de QoS et des conditions radio.

**4.** L'appareil selon l'une quelconque des Revendications précédentes, configuré en outre de façon à détecter, ou à recevoir une indication d'un brouillage PIM détecté dans l'antenne du nœud, et à ajuster l'attribution de PRB déterminée pour chaque UE de façon à concilier un chevauchement entre les PRB appropriés pour chaque UE.

**5.** L'appareil selon l'une quelconque des Revendications précédentes, où le module logique est configuré en outre de façon à : dans des PRB où les attributions de PRB des différents UE se chevauchent, ajuster l'attribution de PRB déterminée pour chaque UE de façon à concilier tout chevauchement entre les PRB appropriés pour chaque UE en fonction de :

dans le domaine temporel, la minimisation de l'étalement dans des intervalles temporels pour chaque UE, et dans le domaine fréquentiel, la maximisation de l'étalement en fréquence pour chaque UE.

**6.** L'appareil selon l'une quelconque des Revendications précédentes, où le module logique est configuré de façon à grouper des PRB de façon à produire des attributions de ressources en regroupements, chacun d'eux possédant des portées continues dans des intervalles temporels et en fréquence, les regroupements étant ajustés de façon à minimiser la PIM.

7. L'appareil selon l'une quelconque des Revendications précédentes, configuré pour une utilisation en tant que planificateur dans un réseau à évolution à long terme, LTE, Version 8 ou un réseau conforme à la norme ultérieur.

8. L'appareil selon l'une quelconque des Revendications précédentes, où l'appareil est configuré en tant que partie d'un planificateur et où le nœud est un nœud B évolué, eNB.

9. L'appareil selon la Revendication 7, où l'appareil est configuré en tant que planificateur de façon à amener le eNB à transmettre des données mises en mémoire tampon pour les UE aux UE dans blocs de ressources attribués dans la trame.

10. L'appareil selon l'une quelconque des Revendications précédentes, où le module logique est configuré en outre de façon à recevoir des CQI à chaque intervalle de temps de transmission, TTI.

11. L'appareil selon l'une quelconque des Revendications précédentes où les CQI comprennent une partie d'informations de commande en liaison montante, UCI.

12. L'appareil selon l'une quelconque des Revendications précédentes, où le module logique est configuré de façon à fonctionner de façon à déterminer des attributions de PRB pour chaque UE en fonction des CQI pour chaque trame à chaque intervalle de temps de transmission, TTI.

13. L'appareil selon l'une quelconque des Revendications précédentes, comprenant en outre un ou plusieurs processeurs et un support lisible par ordinateur conservant en mémoire des instructions qui, lorsqu'elles sont exécutées par les un ou plusieurs processeurs, instancient et actionnent le module logique.

14. Un procédé de commande d'une attribution de ressources radio dans un nœud d'un réseau d'accès radio destiné à la minimisation d'un brouillage dans un signal en liaison montante reçu provoqué par une intermodulation passive, PIM, entre des signaux en liaison descendante destinés à une transmission par la même antenne dans la même trame, le procédé comprenant les opérations suivantes :

l'attribution de blocs de ressource physiques, PRB, à une pluralité d'équipements d'utilisateur, UE, dans une trame en liaison descendante destinés à la transmission de données aux UE à partir d'une antenne unique du nœud,
la réception (604) d'indicateurs de qualité de canal, CQI, d'attributions de PRB destinées à différents UE dans la trame,
la détermination (606) de PRB appropriés pour chaque UE en fonction des CQI, et
la détermination (608) d'une attribution de PRB pour chaque UE à partir des PRB appropriés pour chaque UE en fonction de :

dans le domaine temporel, la minimisation de l'étalement dans des intervalles temporels pour chaque UE, et
dans le domaine fréquentiel, la maximisation de l'étalement en fréquence pour chaque UE.

15. Un support lisible par ordinateur conservant en mémoire des instructions qui, lorsqu'elles sont exécutées par les un ou plusieurs processeurs d'un appareil selon l'une quelconque des Revendications 1 à 13, instancient et actionnent le module logique.

Figure 1

Figure 2

Figure 3

502 CQI

504 CQI

501

506 Cell 1 Scheduler

507

508 Cell 2 Scheduler

510 Resource Allocation in Frame

512 Resource Allocation in Frame

Figure 5

602 Initialise scheduler

604 Receive CQIs from all UEs

606 Determine suitable resource blocks for each UE

608 Determine a resource block allocation for each UE by maximizing the spread in frequency and minimizing the spread in time

610 Wait for next TTI

Figure 6

800

802

804

806

Frequency

Time

Figure 7A

800

812

814

816

Frequency

Time

Figure 7B

Power

$f_{PIM1}$          $f_1$          $f_2$          $f_{PIM2}$          Frequency

## Figure 8A

Power

$Tx_1$          $Tx_2$

$f_{1L}$     $f_{1H}$          $f_{2L}$     $f_{2H}$          Frequency

## Figure 8B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2508383 A